# EUROPÄISCHE PATENTSCHRIFT

(11) **EP 2 414 551 B1**
(45) Veröffentlichungstag und Bekanntmachung des Hinweises auf die Patenterteilung: **02.12.2020**
(21) Anmeldenummer: 10710215.4
(22) Anmeldetag: 17.03.2010
(51) Int. Cl.: C21D 1/40, C21D 1/42, C21D 1/673, C21D 9/48, B21D 22/20

(54) **VERFAHREN ZUR HERSTELLUNG EINES BAUTEILS, INSBESONDERE EINES KAROSSERIETEILES, SOWIE FERTIGUNGSSTRASSE ZUR DURCHFÜHRUNG DES VERFAHRENS**
PROCESS FOR PRODUCING A COMPONENT, IN PARTICULAR A VEHICLE BODY PART, AND PRODUCTION LINE FOR CARRYING OUT THE PROCESS
PROCÉDÉ DE PRODUCTION D'UN ÉLÉMENT, EN PARTICULIER D'UNE PARTIE DE CARROSSERIE, ET CHAÎNE DE FABRICATION PERMETTANT DE METTRE EN OEUVRE LEDIT PROCÉDÉ

(30) Priorität: 02.04.2009 DE 102009016027
(43) Veröffentlichungstag der Anmeldung: 08.02.2012
(73) Patentinhaber: Volkswagen Aktiengesellschaft, 38440 Wolfsburg (DE); Audi AG, 85045 Ingolstadt (DE)
(72) Erfinder: MEKKAOUI ALAOUI, Mohamed, 30659 Hannover (DE); MALEK, Roland, 38440 Wolfsburg (DE); KOTZIAN, Mathias, 38446 Wolfsburg (DE); WALTL, Hubert, 85107 Baar-Ebenhausen (DE); HAMANN, Holger, 85092 Kösching (DE)
(74) Vertreter: Schulz Junghans Patentanwälte PartGmbB
(86) Internationale Anmeldenummer: PCT/EP2010/001662
(87) Internationale Veröffentlichungsnummer: WO 2010/112140

(56) Entgegenhaltungen:
- EP-A2- 0 816 520
- WO-A1-00/74441
- WO-A1-2005/009642
- DE-A1- 10 212 819
- DE-A1- 19 653 543
- DE-A1- 19 743 802
- DE-A1-102005 045 466
- DE-A1-102006 032 617
- DE-C1- 10 208 216
- DE-C1- 10 212 820
- MAIKRANZ-VALENTIN M ET AL: "Components with optimised properties due to advanced thermo-mechanical process strategies in hot sheet metal forming" STEEL RESEARCH INTERNATIONAL, VERLAG STAHLEISEN GMBH., DUSSELDORF, DE, Bd. 79, Nr. 2, 1. Februar 2008 (2008-02-01), Seiten 92-97, XP009120735 ISSN: 1611-3683
- HEIN PHILIPP ET AL: "Status and innovation trends in hot stamping of USIBOR 1500 P" STEEL RESEARCH INTERNATIONAL, VERLAG STAHLEISEN GMBH., DUSSELDORF, DE, Bd. 79, Nr. 2, 1. Februar 2008 (2008-02-01), Seiten 85-91, XP009101799 ISSN: 1611-3683

## Beschreibung

Die vorliegende Erfindung betrifft ein Verfahren zur Herstellung eines Bauteils, insbesondere eines Karosserieteiles, bei dem ein Werkstück zur Herstellung des Bauteils mehrere Fertigungsstufen durchläuft und in jeder Fertigungsstufe ein Fertigungsverfahren durchgeführt wird, wobei das Werkstück zwecks Realisierung einer jeden Fertigungsstufe jeweils einer Bearbeitungsstation zur Durchführung des jeweiligen Fertigungsverfahrens zugeführt wird.

Ein zur Realisierung einer Fertigungsstufe dienendes Fertigungsverfahren ist ein Warmumformen des Werkstückes, zu dessen Zweck das Werkstück einem ersten, zumindest partiellen Erwärmen unterzogen wird. Nach dem Warmumformen wird wenigstens ein weiteres Fertigungsverfahren am Werkstück durchgeführt.

Außerdem betrifft die vorliegende Erfindung eine Fertigungsstraße, mit der bevorzugt das erfindungsgemäße Verfahren durchgeführt werden kann.

Insbesondere Karosserieteile aus hoch- beziehungsweise höherfestem Material werden üblicherweise auf Fertigungsstraßen, wie zum Beispiel Serienpressenstraßen, gefertigt. In den Fertigungsstraßen beziehungsweise Pressenstraßen sind als mehrere Bearbeitungsstationen üblicherweise Umformeinrichtungen und Beschneideinrichtungen sowie gegebenenfalls Einrichtungen zur Durchführung weiterer Verfahren, wie zum Beispiel Formeigenschaftsändern oder Beschichten, angeordnet.

Zur Minderung der Festigkeit des zu bearbeitenden Werkstückes wird dabei insbesondere zur Vorbereitung des Umformschrittes das Werkstück erwärmt, so dass eine Warmumformung stattfinden kann.

Herkömmliche Pressenstraßen sind zu diesem Zweck mit einem Durchlaufofen verbunden, der in Materialflussrichtung der Pressenstraße vorgeordnet ist. Das heißt, dass das zu bearbeitende Werkstück zunächst im Durchlaufofen erhitzt wird und anschließend einer ersten Warmumformungseinrichtung zugeführt wird, um es im erwärmten Zustand zu bearbeiten. Je nach Abkühlung des Werkstückes in der Warmumformungseinrichtung kann gegebenenfalls noch Restwärme des Werkstückes ausgenutzt werden bei nachfolgenden Beschneidprozessen. Nachteilig an dieser Verfahrensausgestaltung ist, dass der Durchlaufofen einen relativ großen Platzbedarf aufweist und lediglich vor der Pressenstraße angeordnet werden kann. Der Betrieb des Durchlaufofens ist aufgrund eines hohen Energiebedarfes kostenintensiv. Eine gezielte Erwärmung von lediglich Werkstückbereichen ist mit dem Durchlaufofen nicht oder nur aufwendig realisierbar.

Weiterhin besteht bei hochfesten Blechwerkstoffen, die einen erhöhten Wasserstoffgehalt aufweisen oder bei denen beim Durchlaufen des Ofens Wasserstoff eindiffundiert und die mit hohen Zugspannungen beaufschlagt werden, für das Werkstück die Gefahr der wasserstoffinduzierten Spannungsrisskorrosion. Hierdurch kommt es zu zeitverzögerter Rissbildung im gefertigten Werkstück. Dies betrifft nicht die Situation, in der das Werkstück gerade zuvor den Durchlaufofen verlassen hat oder Abkühlphasen zwischen einzelnen Bearbeitungsstationen, wie zum Beispiel zwischen einer Warmumformeinrichtung und einer Beschneideinrichtung, sondern die Situation nach Verlassen der Pressenstraße oder Fertigungseinrichtung oder nach dem Verbau des Blechteils in einem Zusammenbau (ZSB). Hier werden durch nachfolgende Bearbeitungen, insbesondere durch das Schweißen, lokal hohe Zugeigenspannungen eingebracht, die in Zusammenhang mit der hohen Festigkeit und des erhöhten Wasserstoffgehalts zu einer zeitverzögerter Rissbildung führen können.

Dem Fachmann sind eine Reihe von Erwärmungseinrichtungen aus DE10212820C1 und/ oder DE19743802A1 bekannt.

Zur Verhinderung einer zu starken beziehungsweise zu schnellen Abkühlung offenbart die DE 31 02 638 A1 eine Einrichtung, mittels derer Werkstücke während ihres Transportes zwischen Bearbeitungsstationen wieder erwärmt werden können beziehungsweise auf einem vorherigen Temperaturniveau gehalten werden können. Nachteilig an dieser Einrichtung sind die flurgebundene Transportweise sowie der Aufwand zur Installation der Erwärmungseinrichtung am Werkstück.

In der DE 103 12 623 A1 ist eine Erwärmungsanlage offenbart, mittels derer induktiv Flachgut während seiner Bewegung erwärmt werden kann. In der DE 103 12 623 A1 wird dem Fachmann allerdings keine Lehre an die Hand gegeben, an welcher Stelle beziehungsweise zu welchem Zeitpunkt eine derartige Erwärmungsanlage in einem Gesamt-Herstellungsverfahren zu integrieren ist.

Die DE 2 423 267 beschreibt ein Verfahren zur Herstellung von Kurbelwellen, bei dem zwischen Warmumformungsschritten erneut eine Erwärmung vorgenommen wird. Das heißt, dass das Werkstück zunächst in einem Werkzeug unter Abgabe von Wärme umgeformt wird, anschließend dieses Werkstück wieder auf ein höheres Temperaturniveau gebracht wird und danach in diesem Werkzeug erneut warmumgeformt beziehungsweise nachgeformt wird.

Aus der DE 10 2005 055 494 B3 ist ein Verfahren zur Herstellung eines Bauteiles aus einem metallischen Flachprodukt bekannt, mit dem das Flachprodukt mittels konduktiver Erwärmung mindestens abschnittsweise auf eine Umformtemperatur erwärmt wird, bevor es in ein Umformwerkzeug eingelegt wird und pressumgeformt wird. In dem hier beschriebenen Verfahren werden alle herkömmlichen Schritte zur Realisierung einer Warmumformung beschrieben, allerdings ohne eine Implementierung dieser einzelnen Verfahrensschritte in eine Gesamt-Abfolge mehrerer Umform- und/oder Beschneidoperationen auf einer Pressenstraße zu berücksichtigen.

Der vorliegenden Erfindung liegt die Aufgabe zugrunde, ein Verfahren und eine Einrichtung zur Verfügung zu stellen, mittels derer aus einem Werkstück ein Bauteil oder Endprodukt unter Zuhilfenahme der Warmumformung und weiterer, sich anschließender Fertigungsverfahren effizient und flexibel sowie hinsichtlich der einzustellenden Werkstoffeigenschaften gezielt beeinflussbar hergestellt werden kann.

Diese Aufgabe wird durch das im Anspruch 1 genannte Verfahren zur Herstellung eines Bauteils gelöst. Vorteilhafte Ausgestaltungen dieses Verfahrens schließen sich in den Unteransprüchen 2 bis 6 an. Außerdem wird die Aufgabe durch die erfindungsgemäße Fertigungsstraße nach Anspruch 7 gelöst. Vorteilhafte Ausgestaltungen der Fertigungsstraße schließen sich in den Unteransprüchen 8 and 9 an.

Erfindungsgemäß wird ein Verfahren zur Herstellung eines Bauteils, insbesondere eines Karosserieteils, zur Verfügung gestellt, bei dem ein Werkstück zur Herstellung des Bauteils mehrere Fertigungsstufen durchläuft und in jeder Fertigungsstufe ein Fertigungsverfahren durchgeführt wird und das Werkstück zwecks Realisierung einer jeden Fertigungsstufe jeweils einer Bearbeitungsstation zur Durchführung des jeweiligen Fertigungsverfahrens zugeführt wird. Wenigstens eines der Fertigungsverfahren ist dabei ein Warmumformen des Werkstückes, zu dessen Zweck das Werkstück zuvor einem ersten, zumindest partiellen Erwärmen unterzogen wird. Das Verfahren ist derart ausgestaltet, dass nach dem Warmumformen wenigstens ein weiteres Fertigungsverfahren am Werkstück durchgeführt wird. Erfindungsgemäß wird das Werkstück zur Verbesserung seines Formänderungsvermögens und/oder Verringerung der Festigkeit zur Vorbereitung des weiteren Fertigungsverfahrens mittels wenigstens einer im Fertigungsablauf zwischen Bearbeitungsstationen angeordneten Erwärmungseinrichtung zumindest partiell erneut erwärmt.

Das erneute Erwärmen des Werkstücks erfolgt mittels Stromfluss in Form von Wirbelströmen durch das Werkstück induktiv.

Es ist dabei vorgesehen, dass das Warmumformen ein erstes Warmumformen ist und das weitere, nach dem ersten Warmumformen durchgeführte Fertigungsverfahren ein zweites Warmumformen ist, oder dass das nach dem Warmumformen durchgeführte Fertigungsverfahren ein Trennverfahren, insbesondere ein mechanisches Beschneiden, ist. Das Werkstück wird zur Realisierung unterschiedlicher Fertigungsstufen jeweils einer Bearbeitungsstation zugeführt, wobei üblicherweise je Fertigungsverfahren eine Bearbeitungsstation angeordnet ist, wobei allerdings auch bei gleichen Verfahren, die nur zeitlich versetzt in der Gesamt-Herstellung durchgeführt werden sollen, auch die gleiche Station oder eine gleichartige, zur Durchführung des Verfahrens geeignete Station verwendet werden kann. Bis zur Beendigung der Gesamt-Herstellung erfolgt eine Zuführung des Werkstückes nach jedem Fertigungsverfahren auf einer Bearbeitungsstation zur jeweils nächsten Bearbeitungsstation. Das erste Erwärmen findet vor dem ersten Warmumformen statt, um dem Werkstück die benötigte Wärme zur Minderung seiner Festigkeit zukommen zu lassen. Dass die Erwärmungseinrichtung zwischen Bearbeitungsstationen angeordnet ist, ist nicht unbedingt räumlich oder linear zu sehen, sondern bezogen auf den Ablauf des Gesamt-Verfahrens, nämlich zwischen der Realisierung von zwei Fertigungsverfahren zur Herstellung bestimmter Fertigungsstufen auf zwei Bearbeitungsstationen. Das heißt, dass die Angabe, dass die Erwärmungseinrichtung zwischen Bearbeitungsstationen angeordnet ist, darauf bezogen ist, dass sie im Materialfluss zwischen jeweils zwei Bearbeitungsstationen angeordnet ist.

Wie bereits erwähnt, muss zur Durchführung des Warmumformens das Werkstück einem ersten Erwärmen unterzogen werden. Dabei soll die erfindungsgemäße Lehre nicht dahingehend eingeschränkt werden, dass zuvor, innerhalb der Gesamt-Fertigung, nicht gegebenenfalls bereits eine Erwärmung außerhalb der Fertigungsstraße zur Durchführung des erfindungsgemäßen Verfahrens durchgeführt wurde.

Der Vorteil des erfindungsgemäßen Verfahrens liegt insbesondere darin, dass zur Erleichterung der der Warmumformung nachfolgenden Bearbeitungsverfahren nach bereits erfolgter Abkühlung des Werkstückes während der Warmumformung erneut eine Erwärmung des Werkstückes stattfindet. Dadurch wird insbesondere die bei herkömmlichen Verfahren auftretende wasserstoffinduzierte Spannungsrisskorrosion gemindert beziehungsweise sogar eliminiert, da das Einbringen von hohen Zugeigenspannungen, wie beispielsweise durch mechanisches Beschneiden oder Nachformen im kalten Bauteilzustand, reduziert oder gar vermieden wird. Statt eines herkömmlichen Durchlaufofens werden eine oder mehrere Erwärmungseinrichtungen in die Fertigungsstraße vor jeweiligen Bearbeitungsstationen, wie zum Beispiel Umformpressen oder Beschneideinrichtungen, integriert. Die zur Durchführung der nachfolgenden Verfahren benötigte Wärme kann mittels der Erwärmungseinrichtung in genau der Menge beziehungsweise der Höhe zugeführt werden, wie sie zur Durchführung der Verfahren benötigt wird. Insbesondere lassen sich gezielt bestimmte Werkstückregionen erwärmen, um sie anschließend den Bearbeitungen zu unterziehen. Dies bewirkt einen geringeren Energieeinsatz und geringere thermische Belastung der Anlagen zur Verarbeitung der erwärmten Werkstücke sowie eine optimale Temperierung des Werkstücks bei einer jeweiligen Bearbeitung.

Neben der Energieeffizienz ergibt sich ein weiterer Vorteil der gezielten Beeinflussbarkeit von Werkstück- beziehungsweise Bauteileigenschaften in bestimmten Bauteilregionen. Außerdem ist durch den Einsatz der erfindungsgemäßen Erwärmungseinrichtung ein geringerer Fertigungszeitaufwand, insbesondere bei nur regionaler Erwärmung der Werkstücke, zu verzeichnen. Im Vergleich mit einem Durchlaufofen lassen sich während der Gesamt-Herstellung vor und/oder nach Warmumformungseinrichtungen und/oder Beschneideinrichtungen in einer Fertigungsstraße höhere Temperaturen durch die Erwärmungseinrichtungen einstellen, als dies mit einer anfänglichen Erwärmung mittels eines Durchlaufofens möglich wäre.

Das erfindungsgemäße Verfahren kann insbesondere bei der Herstellung von werkzeugfallenden Bauteilen verwendet werden, das heißt bei einer Produktion der Bauteile auf Fertigungsstraßen, in denen das Bauteil mehrere Fertigungsstufen durchläuft und vollmechanisiert von einer Bearbeitungsstation zur nächsten Bearbeitungsstation transportiert wird und am Ende der Fertigungsstraße in einem endproduktnahen Zustand entnommen werden kann. Durch den Austausch des Durchlaufofens mit den in der Fertigungsstraße angeordneten Erwärmungseinrichtungen muss letztendlich weniger Wärme in das Werkstück eingebracht werden als bei einem Durchlaufofen, der das Werkstück am Anfang der Fertigungsstraße bereits auf ein Temperaturniveau bringen muss, welches es ermöglicht, das Werkstück selbst nach Durchführung mehrerer Fertigungsverfahren noch in einem erwärmten Zustand zu verarbeiten. Durch den Einsatz mehrerer, im Vergleich zum Durchlaufofen kleinerer Erwärmungseinrichtungen, lässt sich eine Fertigungsstraße zur Durchführung des Verfahrens kürzer sowie variabler aufbauen und es lassen sich herkömmliche Pressenstraßen zu Einrichtungen nachrüsten, mittels derer das erfindungsgemäße Verfahren ausführbar ist. Die Warmumformung wird in einem Presswerkzeug realisiert. Die Erwärmung des Werkstückes vor dem Einlegen in das Presswerkzeug sollte auf über 1023 K, vorzugsweise auf 1173 K bis 1223 K bei zu härtenden Bauteilen und auf lediglich auf 823 K bis 873 K bei Teilen, die nicht gehärtet werden sollen und zur Zunderbildung neigen, wie zum Beispiel Schwarzblech oder verzinktes Blech, erfolgen. Bei den nicht zu härtenden Bauteilen erfolgt keine wesentliche Abkühlung des Werkstücks, das heißt, dass das Werkstück im Wesentlichen mit der Temperatur das Werkzeug verlässt, mit der es in das Werkzeug zuvor eingelegt wurde. Bei zu härtenden Werkstücken soll vorteilhafterweise eine Abkühlung im Warmumformwerkzeug auf eine Temperatur, die weniger als 473 K beträgt, erfolgen. Bei nicht zu härtenden Teilen, die auf lediglich 823 K bis 873 K zuvor erwärmt wurden, findet keine wesentliche Abkühlung statt, das heißt, dass das Werkstück das erste Presswerkzeug mit im Wesentlichen derselben Temperatur verlässt.

Am Werkstück wird ein erstes Erwärmen zur Vorbereitung des ersten Warmumformens durchgeführt und danach wird zur Vorbereitung des zweiten Warmumformens eine zweite Erwärmung durchgeführt. Es können dabei mit dem zweiten Warmumformen andere als im ersten Warmumformen umgeformte Teilbereiche umgeformt werden. Alternativ dazu können aber auch die gleichen Teilbereiche oder diese Teilbereiche überlappende Bereiche, das heißt zuvor umgeformte Bereiche und gleichzeitig daran angrenzende, noch nicht umgeformte Bereiche, im zweiten Warmumformen umgeformt werden. Vorzugsweise sollten aber im zweiten Warmumformen Bereiche umgeformt werden, die im ersten Warmumformen noch nicht umgeformt wurden, oder es sollte ein Nachformen von zum Beispiel Radien an Bereichen erfolgen, die bereits im ersten Warmumformen geformt wurden. Bei der erneuten Warmumformung nach der ersten Warmumformung sollte das Werkstück vor dem Einlegen in die Umformpresse erneut wieder über 1023 K, bevorzugt auf 1173 K bis 1223 K, erwärmt werden. Dabei ist ebenfalls, wie bei der ersten Warmumformung angegeben, das Werkstück bei einer beabsichtigten Härtung auf 1173 K bis 1223 K zu erwärmen und bei nicht beabsichtigter Härtung auf 823 K bis 873 K zu erwärmen. Insbesondere betrifft dies Werkstücke beziehungsweise Werkstoffe, die zur Zunderbildung neigen, wie zum Beispiel Schwarzbleche oder verzinkte Bleche. Auch im zweiten Warmumformen ist vorgesehen, dass bei gewünschter Härtung eine Abkühlung des Werkstückes auf Martensitfinishtemperatur von < 473 K erfolgen muss. Nicht zu härtende Werkstoffe können auch die zweite Umformpresse im Wesentlichen mit der Temperatur verlassen, mit der sie in die Umformpresse eingelegt wurde.

Die Umformwerkzeuge können dabei zur Realisierung der Abkühlung des Werkstückes auf unter 473 K eine Temperatur von 333 K bis 393 K, vorzugsweise bis zu 373 K, aufweisen.

Durch die Erwärmung des Werkstückes werden vor der Beschneidoperation nur noch verringerte Schnittkräfte benötigt. Dies führt zu einem verringerten Energiebedarf zum Betreiben der Anlage zur Realisierung des Beschneidens, zu einer Verringerung des Verzugs des Werkstückes beim Beschnitt sowie zur Verringerung des Verschleißes des Schneidelementes aufgrund der geringeren benötigten Schneidkräfte bei höheren Temperaturen, insbesondere wenn durch den zuvor erfolgten Warmumformungsprozess bereits eine Härtung des Werkstückes vollzogen wurde. Neben dem erwähnten Trennverfahren beziehungsweise Beschneiden lassen sich hinzukommend oder alternativ auch andere Verfahren, wie zum Beispiel Beschichtungs- oder

Stoffeigenschaftsänderungsverfahren, die begünstigt unter erhöhter Werkstücktemperatur ablaufen, durchführen. In besonderer Ausgestaltung des Verfahrens ist vorgesehen, dass nach dem Warmumformen nur noch Beschneidoperationen in der Pressenstraße durchgeführt werden, so dass die erneute Erwärmung im Wesentlichen ausschließlich zur Erleichterung der Schneidvorgänge und Verringerung des Verzuges des Werkstückes und des Werkzeugverschleißes dient.

Die induktive Erwärmung lässt sich mittels Induktionseinrichtungen durchführen, welche vorteilhafterweise an die Form des Werkstückes zwischen den jeweiligen Fertigungsstufen angepasst ist. Durch die Induktionseinrichtungen werden Wirbelströme im Werkstück erzeugt, die zur Erwärmung des Werkstückes führen. Der Vorteil dieser Verfahrensausgestaltung liegt in der formunabhängigen Erwärmung des Werkstückes und einem geringen Platz- und Volumenbedarf für die Erwärmungseinrichtung. Dadurch ergeben sich bessere Integrationsmöglichkeiten in bestehende Pressenstraßen. Außerdem lässt sich durch die Induktionseinrichtung eine wesentlich schnellere Erwärmung als mit herkömmlichen Einrichtungen durchführen. Die Erfindung ist dabei allerdings nicht nur auf die Realisierung einer induktiven Erwärmung eingeschränkt, sondern es kann vorgesehen sein, dass auch Kombinationen von induktiver und konduktiver Erwärmung in einem Gesamt-Fertigungsverfahren realisiert werden.

Das erfindungsgemäße Verfahren kann vorteilhaft dadurch ausgestaltet sein, dass das erneute Erwärmen des Werkstücks während des Transportes erfolgt. Das heißt, dass während der Bewegung des Werkstückes von einer Bearbeitungsstation zur nächsten das Werkstück erwärmt wird. Es wird somit die Transferzeit des Werkstückes für die Erwärmung genutzt, wodurch sich die gesamte Fertigungszeit reduziert.

In einer alternativen Ausgestaltung kann vorgesehen sein, dass das erneute Erwärmen des Werkstücks während dessen Ablage zwischen zwei Bearbeitungsstationen erfolgt. Das heißt, dass zwischen zwei Bearbeitungsstationen eine Ablageeinrichtung vorhanden sein kann, auf der das Werkstück in einer Warteposition vor dem nächsten Fertigungsverfahren abgelegt wird. Auf oder in dieser Ablageeinrichtung lässt sich das Werkstück mittels einer Erwärmungseinrichtung erneut erwärmen.

Das heißt, dass eine erneute Erwärmung nach dem Warmumformen gemäß des erfindungsgemäßen Verfahrens nicht während einer Bearbeitung, wie zum Beispiel Umformen oder Beschneiden, des Werkstückes erfolgt, sondern lediglich zwischen der Realisierung der Fertigungsverfahren und somit zwischen den dazugehörigen Bearbeitungsstationen, wie zum Beispiel auf einer Ablageeinrichtung oder beim Transport des Werkstückes.

Durch die Anordnung der erfindungsgemäßen Erwärmungseinrichtungen lässt sich somit dem Werkstück die während seiner Bearbeitung in Bearbeitungsstationen, wie zum Beispiel Pressen oder Beschneideinrichtungen, abgegebene Wärme wieder zuführen. Darüber hinaus lässt sich dem Werkstück weitere Wärme zuführen, um anschließende Bearbeitungsverfahren zu ermöglichen beziehungsweise zu erleichtern.

Das zu verarbeitende Werkstück ist dabei vorzugsweise ein Metallwerkstück, insbesondere ein metallisches Flachprodukt, wie zum Beispiel ein Blech, welches zu einem Karosserieteil zu verarbeiten ist.

Bei der Realisierung eines Beschneidvorganges nach dem Warmumformen soll das Werkstück nach vorheriger Wärmeabgabe an das Warmumformwerkzeug wieder auf eine Temperatur von vorzugsweise 823 K bis 873 K erwärmt werden. Bei Werkstücken, die abgekühlt werden und mit einer Temperatur von etwa 293 K bis 473 K vorliegen, wird ebenfalls eine Erwärmung auf 823 K bis 873 K vorgenommen, um eine thermische Belastung der Schneidelemente gering zu halten. Das heißt, dass der Beschnitt des Werkstückes bei vorzugsweise 823 K bis 873 K durchgeführt werden sollte. In Technologien, in denen bei der Gesamt-Herstellung des Bauteiles eine oder mehrere weitere Beschneidoperationen am Werkstück durchgeführt werden sollen, kann vorgesehen sein, dass sich an das genannte erste Beschneiden ein zweites Beschneiden anschließt oder sich an das erste Beschneiden ein weiterer Warmumformungsprozess und danach ein zweites Beschneiden anschließt. Das heißt, dass das erfindungsgemäße Verfahren darauf gerichtet ist, vor der Bearbeitung des Werkstückes, wie zum Beispiel Umformen oder Beschneiden, das Werkstück auf eine für den jeweiligen Bearbeitungsvorgang günstige Temperatur zu temperieren, wobei diese Temperierung vorzugsweise eine Erwärmung und gegebenenfalls auch eine Abkühlung sein kann. Das heißt, dass das erfindungsgemäße Verfahren auch dann ausgeführt wird, wenn erst nach der Durchführung des Trennverfahrens ein zweites Warmumformen des Werkstückes erfolgt.

Außerdem kann das Verfahren dadurch ausgestaltet sein, dass bei Durchführung eines Trennverfahrens nach dem ersten Warmumformen und vor dem Trennen eine Temperierung, insbesondere eine Abkühlung, des Werkstückes erfolgt.

Auch eine als Abkühlung vorgenommene Temperierung findet außerhalb der Bearbeitungsstationen statt. Eine gewünschte Abkühlung bewirkt eine Temperaturänderung, die über die durch die Umgebungsluft bewirkbare Temperatursenkung hinausgeht.

Das heißt, dass vor dem Trennen beziehungsweise Beschneiden das Werkstück entweder zur Verringerung der Festigkeit erwärmt wird oder auch zwecks Verringerung des thermischen Verschleißes der nachfolgend benutzten Bearbeitungsstationen abgekühlt wird.

Das heißt, dass das Prinzip der Widerstandserwärmung zur Temperaturänderung des Werkstückes ausgenutzt wird.

Das erfindungsgemäße Verfahren zeichnet sich insbesondere dadurch aus, dass auch eine erneute Erwärmung des Werkstückes partiell erfolgen kann. Neben der erneuten Erwärmung des Werkstückes kann auch die erste Erwärmung des Werkstückes lediglich partiell erfolgen. Damit lassen sich Bereiche des Werkstückes erwärmen, die im folgenden Warmumformen verformt werden sollen. Insbesondere bei einem Verhältnis von relativ kleinen umzuformenden Flächen in Bezug zur Gesamtfläche des Werkstückes ist diese Verfahrensalternative sehr effektiv, da zur Durchführung lediglich ein geringer Energieeinsatz notwendig ist. Außerdem wird dadurch vermieden, dass aufgrund hoher eingebrachter Wärmemengen, insbesondere nach bereits erfolgten Verformungen, ungewollte Spannungen oder Verzug im Bauteil auftreten können. Nach partieller Erwärmung kann das Werkstück auch derart verformt werden, dass ein erwärmter und gleichzeitig ein nicht erwärmter Bereich verformt wird, wobei dadurch unterschiedliche Festigkeiten in aneinander grenzenden Zonen durch Kaltverfestigung realisiert werden können und gleichzeitig durch die Erwärmung des erwärmten Bereiches in diesen ein erhöhtes Formänderungsvermögen realisierbar ist.

Die Aufgabe wird außerdem durch eine Fertigungsstraße zur Herstellung eines Bauteils, insbesondere eines Karosserieteiles, gelöst, welche insbesondere zur Durchführung des erfindungsgemäßen Verfahrens geeignet ist. Diese Fertigungsstraße weist mehrere seriell angeordnete Bearbeitungsstationen zur Durchführung jeweils eines Fertigungsverfahrens zur Realisierung unterschiedlicher Fertigungsstufen an einem Werkstück bei der Herstellung des Bauteils auf, wobei die Fertigungsstraße wenigstens eine erste Erwärmungseinrichtung und als wenigstens eine danach angeordnete Bearbeitungsstation eine Warmumformungseinrichtung umfasst.

Die Fertigungsstraße weist nach dieser Warmumformungseinrichtung und vor einer weiteren Bearbeitungsstation eine weitere Erwärmungseinrichtung auf, wobei die weitere Erwärmungseinrichtung dafür geeignet ist, das erneute Erwärmen des Werkstücks mittels Stromfluss in Form von Wirbelströmen durch das Werkstück induktiv zu realisieren.

Zudem weist die Fertigungsstraße nach der Warmumformungseinrichtung eine weitere Bearbeitungsstation zur Durchführung eines weiteren Fertigungsverfahrens auf, wobei das weitere Fertigungsverfahren ein Warmumformverfahren oder ein Trennverfahren, insbesondere ein mechanisches Beschneiden, ist.

Die serielle Anordnung der Bearbeitungsstationen erfolgt in Materialflussrichtung, das heißt, dass die Bearbeitungsstationen im Wesentlichen entsprechend dem Materialfluss angeordnet sind. Die Erwärmungseinrichtungen sind wie die Bearbeitungsstationen ebenfalls seriell angeordnet. Die erfindungsgemäße Anordnung einer weiteren Erwärmungseinrichtung dient dazu, nach dem Warmumformen das Werkstück zur Verbesserung seines Formänderungsvermögens und/oder Verringerung seiner Festigkeit zur Vorbereitung des weiteren Fertigungsverfahrens zumindest partiell neu zu erwärmen. Bei Ausführung von Umform- und gegebenenfalls Beschneidoperationen ist die erfindungsgemäße Fertigungsstraße vorteilhafterweise als eine Pressenstraße mit darin angeordneten Pressen zur Durchführung der jeweiligen Fertigungsverfahren ausgestattet. Insbesondere kann diese Pressenstraße zu einer werkzeugfallenden Fertigung der Bauteile dienen, das heißt, dass innerhalb der Pressenstraße ein automatisierter Transport der Werkstücke von einer Bearbeitungsstation zur nächsten erfolgt.

Der Vorteil der erfindungsgemäßen Fertigungsstraße liegt aufgrund der Anordnung gegebenenfalls mehrerer Erwärmungseinrichtungen darin, dass durch die Erwärmung in den Erwärmungseinrichtungen und durch die damit reduzierte oder vermiedene Einbringung von Zugeigenspannungen in das Werkstück, die wasserstoffinduzierte Spannungsrisskorrosion gemindert beziehungsweise vollständig eliminiert wird. Statt eines Durchlaufofens vor der Pressenstraße werden mehrere, hinsichtlich des Energieverbrauchs effizienter arbeitende Erwärmungseinrichtungen vor den jeweiligen Bearbeitungsstationen in der Pressenstraße, wie zum Beispiel Umformpressen oder Beschneideinrichtungen, eingesetzt. Mittels der Erwärmungseinrichtungen lässt sich die gewünschte Wärmemenge örtlich und zeitlich exakter in das Werkstück einbringen, als es mit einem Durchlaufofen möglich wäre. Dadurch ergibt sich neben dem geringeren Energieverbrauch auch eine geringere thermische Belastung der Anlage und der Betriebsmittel sowie die Möglichkeit einer optimalen Temperatursteuerung des Werkstückes vor einer jeweiligen Bearbeitung.

Vorteilhafterweise sind die verwendeten Erwärmungseinrichtungen derart ausgestaltet, dass sie an mehreren Stellen zwischen jeweils unterschiedlichen Bearbeitungsstationen einsetzbar sind. Dadurch lässt sich ein flexibler Aufbau beziehungsweise Umbau von Pressenstraßen sowie auch eine Nachrüstung von bestehenden, herkömmlichen Pressenstraßen realisieren. Es bietet sich an, dass wenigstens eine der verwendeten Erwärmungseinrichtungen eine Durchlaufanlage mit Querfeldinduktor oder Längsfeldinduktor zur induktiven und weitestgehend von der Form des Werkstücks unabhängigen Erwärmung ist.

Die Erfindung wird im Folgenden anhand der beiliegenden Zeichnungen beschrieben. Es zeigen dabei:
Figur 1 eine Fertigungsstraße zur Durchführung des erfindungsgemäßen Verfahrens mit konduktiver Erwärmung und
Figur 2 eine erfindungsgemäße Fertigungsstraße zur Durchführung des erfindungsgemäßen Verfahrens mit induktiver Erwärmung.

Das erfindungsgemäße Verfahren ist insbesondere zur Verarbeitung von hoch- und höherfesten Stahlwerkstoffen geeignet. Vorzugsweise kann ein 22MnB5 verarbeitet werden. Dabei sollten bevorzugt die folgenden Legierungsbestandteile mit den dazu angegebenen Mengenprozenten Verwendung finden:

| | |
|---|---|
| C: | 0,20 bis 0,25 %, |
| Si: | 0,15 bis 0,40 %, |
| Mn: | 1,10 bis 1,40 %, |
| Cr: | ≤ 0,35 % |
| Mo: | ≤ 0,35 % |
| P: | ≤ 0,025 % |
| S: | ≤ 0,005 % |
| Ti: | 0,020 bis 0,050 %, |
| Al: | 0,020 bis 0,060 %, |
| B: | 0,002 bis 0,005 %. |

Das zu verarbeitende Werkstück sollte vorzugsweise eine Blechdicke zwischen 1 und 2 mm aufweisen, wobei allerdings auch die Verarbeitung von dünneren oder dickeren Werkstücken nicht ausgeschlossen werden soll. Diese Bleche können mit einer AlSi-Schicht gemäß der EP 0 971 044 B1 beschichtet sein. Neben 22MnB5 lassen sich auch Halbzeuge aus härtbarem und warmumformbarem Stahlblech wie zum Beispiel 25CrMo4, 34CrMo4 oder 42CrMo4 sowie 25CrMoS4, 34CrMoS4 oder 42CrMoS4, wie sie in der DE 10 2006 019 567 B3 offenbart sind, einsetzen. Bei Verfahrensablauf unter Ausschluss einer Härtung des Werkstückes beziehungsweise des eingesetzten Werkstoffes können außerdem alle hochfesten Blechwerkstoffe mit Zugfestigkeiten über 600 MPa eingesetzt werden, wie zum Beispiel CPW-800, DP1000, MS-W1200, HC400LA und dergleichen.

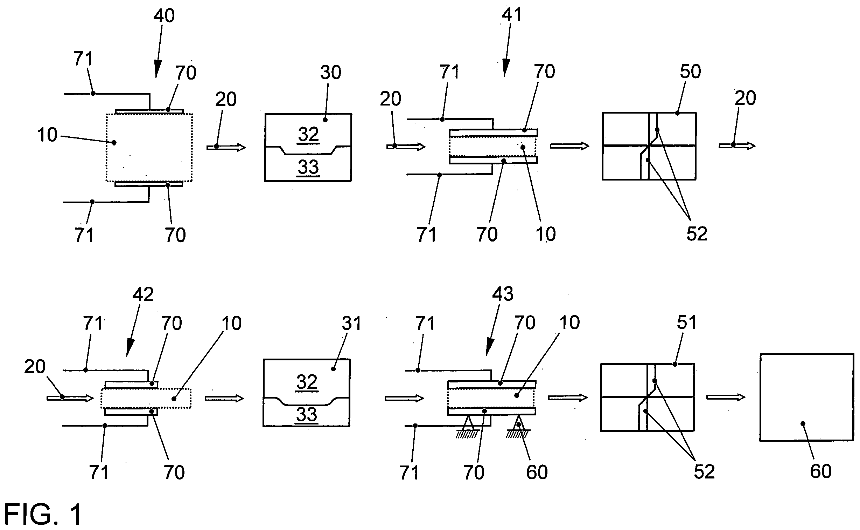

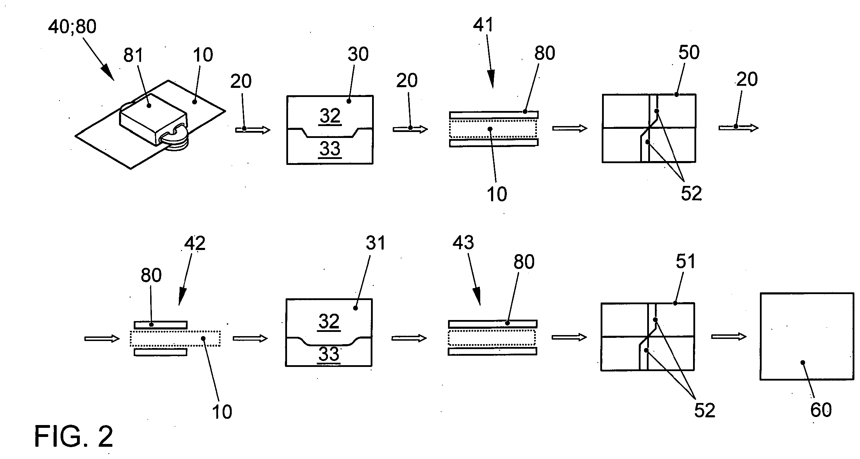

Die in den Figuren 1 und 2 dargestellten Bearbeitungsstationen sind dabei nicht auf die dargestellte Variante festgelegt, sondern in Abhängigkeit insbesondere von der Nachformaufteilung kann die Reihenfolge der Bearbeitungsstationen gegebenenfalls anders sein, so dass zum Beispiel zuerst eine Beschneideinrichtung vor einer Umformeinrichtung angeordnet ist.

In Figur 1 ist eine Fertigungsstraße schematisch dargestellt, in der ein Verfahren realisiert werden kann. Zu diesem Zweck sind vier Erwärmungseinrichtungen 40 bis 43 jeweils vor Bearbeitungsstationen, die als erste Warmumformungseinrichtung 30, erste Beschneideinrichtung 50, zweite Warmumformungseinrichtung 31 und zweite Beschneideinrichtung 51 ausgestaltet sind, angeordnet. Die Erwärmungseinrichtungen 40 bis 43 sind dazu geeignet, dass Werkstück 10 konduktiv zu erwärmen. Zu diesem Zweck weisen die Erwärmungseinrichtungen 40 bis 43 Greifer 70 auf, die an das Werkstück 10 mechanisch kontaktierend anlegbar sind. Mit an den Greifern 70 angeschlossenen Stromleitungen 71 lässt sich das Werkstück mit Strom beaufschlagen und somit mittels Widerstandserwärmung auf ein erhöhtes Temperaturniveau bringen. Nicht dargestellt ist das Merkmal, dass die Greifer 70 ebenfalls zur Bewegung beziehungsweise zum Transport des Werkstückes 10 ausgestaltet sind. Das heißt, dass die Greifer 70 eine Doppelfunktion ausführen, nämlich einerseits die Bewegungsrealisierung des Werkstückes von einer Bearbeitungsstation zur nächsten sowie gleichzeitig die elektrische Kontaktierung des Werkstückes zwecks Erwärmung.

Das Werkstück 10 wird entlang der Materialflussrichtung 20 durch die dargestellte Fertigungsstraße bewegt. Zunächst wird das Werkstück 10 zum Beispiel von einem Stapel oder von einer Palette mittels der Greifer 70 aufgenommen und dabei gleichzeitig auf eine Temperatur von über 1023 K, vorzugsweise von 1173 K bis 1223 K, erwärmt. Die gezeigte Ausführungsform ist dabei nicht darauf eingeschränkt, dass die Erwärmung während des Transportes stattfindet, sondern es kann ebenso vorgesehen sein, dass die Greifer oder eine andere Erwärmungseinrichtung das Werkstück in einer Ruheposition erwärmt.

Das erwärmte Werkstück 10 wird durch die Greifer 70 anschließend in die erste Bearbeitungsstation in Form einer ersten Warmumformungseinrichtung 30, hier dargestellt als Umformpresse, positioniert eingelegt. Die erste Warmumformungseinrichtung 30 umfasst - wie dargestellt - einen Oberstempel 32 und einen Unterstempel 33, die bei Relativbewegung zueinander das Werkstück 10 im warmen Zustand umformen. Bei diesem Prozess wird vorteilhafterweise die erste Warmumformungseinrichtung 30 gekühlt, um zum Beispiel bei einer Verarbeitung des Werkstoffes 22MnB5 bei Abkühlung des Werkstückes auf eine Martensitfinishtemperatur von unter 473 K eine Härtung des Werkstückes zu erzielen.

In einer Verfahrensalternative ist es auch möglich, den Warmumformungsprozess ohne Abkühlung durchzuführen, wenn eine Härtung beziehungsweise eine Martensitbildung vermieden werden soll.

Anschließend wird das Werkstück 10 wiederum mit Greifern 70 aus der ersten Warmumformungseinrichtung 30 entnommen. Im Fall einer in der ersten Warmumformungseinrichtung 30 durchgeführten Abkühlung wird das Werkstück während der Entnahme und dem Transport sowie gegebenenfalls dem Einlegeprozess in die danach angeordnete erste Beschneideinrichtung 50 erneut erwärmt, und zwar auf eine Temperatur von 823 K bis 873 K. Falls keine Abkühlung in der ersten Warmumformungseinrichtung 30 stattfand, wird das Werkstück 10 entgegen der Darstellung in Figur 1 zunächst auf einer Ablageeinrichtung abgelegt und auf eine Temperatur vorzugsweise unter 873 K abgekühlt, um die Schneiden 52 der danach angeordneten ersten Beschneideinrichtung 50 vor einer thermischen Überbelastung zu bewahren. Nach Abkühlung des Werkstückes 10 auf den gewünschten Temperaturwert wird das Werkstück 10 in die erste Beschneideinrichtung 50 eingelegt. Mittels Relativbewegung der Schneiden 52 erfolgt der Beschnitt des temperierten Werkstückes. Das heißt, dass während des Beschneidvorganges in der ersten Beschneideinrichtung 50 das Werkstück eine vergleichsweise hohe Temperatur aufweist, die eine Verringerung der Festigkeit des Werkstückes gegen das Eindringen der Schneiden 52 bewirkt und somit zu einem geringeren Verschleiß der eingesetzten Schneiden 52 sowie Energieverbrauch während der Beschneidoperation führt. Außerdem werden durch das Beschneiden bei höheren Temperaturen weniger Eigenspannungen in das Werkstück eingebracht.

Anschließend wird das Werkstück 10 wieder mit Greifern 70 aufgenommen und während des Transportes von der ersten Beschneideinrichtung 50 zur zweiten Warmumformungseinrichtung 31 oder auch während der Ablage des Werkstückes 10 zwischen diesen beiden Bearbeitungsstationen erneut erwärmt. Die Erwärmung kann vorteilhafterweise wie in Figur 1 dargestellt auch in diesem Verfahrensstadium konduktiv erfolgen. Die Erwärmung sollte vorzugsweise auf über 1023 K, vorteilhafterweise auf einen Temperaturbereich von 1173 K bis 1223 K, durchgeführt werden. Wie auch bei der zuerst durchgeführten Erwärmung lassen sich durch eine gezielte Anordnung der Greifer 70 am Werkstück 10 auch nur ein oder mehrere Teilbereiche des Werkstückes 10 auf die gewünschte Temperatur erwärmen. Nach erfolgter Erwärmung des Werkstückes 10 wird dieses in die zweite Warmumformungseinrichtung 31 eingelegt, die zum Beispiel derart ausgestaltet sein kann, dass mit ihr ein Nachformungsprozess, beispielsweise von Radien oder Flanschen, durchgeführt werden kann. Es bietet sich dabei an, dass insbesondere bei nur bereichsweise Erwärmung des Werkstückes auch nur eine bereichsweise Umformung, zum Beispiel in der zweiten Warmumformungseinrichtung 31, stattfindet. Dies trifft insbesondere auf den Fall zu, in dem lediglich Radien nachgeformt werden sollen, da in diesem Fall auch nur die Radienbereiche zu erwärmen und zu verformen sind. In diesem Fall ist die zweite Warmumformungseinrichtung 31 eine Nachformpresse.

Nach der Nachformung in der zweiten Warmumformungseinrichtung 31 wird das Werkstück 10 wiederum von den Greifern 70 gegriffen und transportiert. Das Verfahren kann, wie bereits erwähnt, auch dadurch ausgestaltet sein, dass die konduktive Erwärmung des Werkstückes 10 durch die Greifer 70 nicht nur während des Transportes des Werkstückes 10 erfolgt, sondern auch in einer Ruhelage des Werkstückes, zum Beispiel auf einer Ablageeinrichtung 60. Dies bietet sich insbesondere dann an, wenn fertigungszeitbedingt Stausituationen im Materialfluss auftreten können.

Auch bei der erneuten Temperierung wird das Werkstück, wenn zuvor eine Abkühlung stattfand, auf ein gewünschtes Temperaturniveau erwärmt oder, falls in der zweiten Warmumformungseinrichtung 31 keine Abkühlung stattfand, auf eine Temperatur von vorzugsweise unter 873 K abgekühlt. Anschließend wird das Werkstück mittels der Greifer 70 in die zweite Beschneideinrichtung 51, die zum Beispiel eine Fertigbeschneidpresse sein kann, transportiert und positioniert eingelegt. In dieser zweiten Beschneideinrichtung 51 wird wiederum das Werkstück 10 beschnitten, vorzugsweise bereits auf das Endmaß. Die fertig beschnittenen, werkzeugfallenden Werkstücke 10 werden anschließend vorzugsweise mit Greifern 70 aus der zweiten Beschneideinrichtung 51 herausgenommen und auf eine Ablageeinrichtung 60 abgelegt beziehungsweise abgestapelt. Das Abstapeln erfolgt vorzugsweise in wärmeisolierten Behältern, um ein langsames Abkühlen der Bauteile zu gewährleisten. Neben der Reduzierung von Eigenspannungen im hergestellten Bauteil wird auch die wasserstoffinduzierte Spannungsrisskorrosion im Bauteil vermieden.

Das erfindungsgemäße Verfahren ist nicht auf die in Figur 1 dargestellten Schritte beziehungsweise Anordnungen von Bearbeitungsstationen festgelegt, sondern es können im Bereich der Erfindung auch andere Fertigungsverfahren nach der erneuten Erwärmung nach der ersten Warmumformungseinrichtung 30 stattfinden. Außerdem kann das Verfahren auch derart ausgestaltet sein, dass weitere Umformverfahren erst nach erfolgten Beschneidoperationen durchgeführt werden. Die Anordnung der einzelnen Bearbeitungsstationen zur Durchführung jeweils eines Fertigungsverfahrens hängt im Wesentlichen von der Beschnitt- und Nachformaufteilung des jeweils herzustellenden Bauteiles ab.

In Figur 2 ist ein erfindungsgemäßes Fertigungsverfahren dargestellt, bei dem das induktive Erwärmungsprinzip statt des in Figur 1 dargestellten konduktiven Erwärmungsprinzips angewendet wird. Zu diesem Zweck ist eine Induktionseinrichtung 80, die eine Durchlaufanlage mit Querfeldinduktor 81 umfasst, vor der ersten Warmumformungseinrichtung 30 angeordnet. Statt des dargestellten Querfeldinduktors 81 oder auch in Ergänzung dazu lässt sich auch ein Längsfeldinduktor (nicht dargestellt) einsetzen. Mittels der Induktionseinrichtung 80 lässt sich das Werkstück 10 zwischen den einzelnen Bearbeitungsstationen, nämlich der ersten Warmumformungseinrichtung 30, der ersten Beschneideinrichtung 50, der zweiten Warmumformungseinrichtung 31 und der zweiten Beschneideinrichtung 51 , durchführen. Zwischen diesen genannten Bearbeitungsstationen ist die zweite, die dritte und die vierte Erwärmungseinrichtung 41 bis 43 angeordnet. Mittels der Erwärmungseinrichtungen 40 bis 43 lässt sich das Werkstück sowohl bei dessen Transport in Richtung des Materialflusses 20 als auch in dessen Ruheposition, zum Beispiel auf einer Ablageeinrichtung 60, erwärmen. Der Vorteil der Erwärmung mittels Induktionseinrichtung 80 besteht im Wesentlichen darin, dass das Werkstück ohne Anpassung von mechanischen Kontaktelementen formunabhängiger erwärmt werden kann. Dies ermöglicht eine flexiblere Anordnung von Induktionseinrichtungen 80 in jeweiligen Bearbeitungsstadien. Außerdem lassen sich einzelne Erwärmungseinrichtungen beziehungsweise Induktionseinrichtungen 80 je nach gewünschtem Verfahrensablauf flexibel mit anderen Erwärmungseinrichtungen austauschen beziehungsweise bestehende Pressenstraßen mit derartigen Induktionseinrichtungen 80 nachrüsten.

### Bezugszeichenliste

- 10: Werkstück
- 20: Materialflussrichtung
- 30: erste Warmumformungseinrichtung
- 31: zweite Warmumformungseinrichtung
- 32: Oberstempel
- 33: Unterstempel

- 40: erste Erwärmungseinrichtung
- 41: zweite Erwärmungseinrichtung
- 42: dritte Erwärmungseinrichtung
- 43: vierte Erwärmungseinrichtung
- 50: erste Beschneideinrichtung
- 51: zweite Beschneideinrichtung
- 52: Schneide

- 60: Ablageeinrichtung

- 70: Greifer
- 71: Stromleitung

- 80: Induktionseinrichtung
- 81: Durchlaufanlage mit Querfeldinduktor

## Patentansprüche

1. Verfahren zur Herstellung eines Bauteils, insbesondere eines Karosserieteiles, bei dem ein Werkstück (10) zur Herstellung des Bauteils mehrere Fertigungsstufen durchläuft und in jeder Fertigungsstufe ein Fertigungsverfahren durchgeführt wird und das Werkstück (10) zwecks Realisierung einer jeden Fertigungsstufe jeweils einer Bearbeitungsstation zur Durchführung des jeweiligen Fertigungsverfahrens zugeführt wird,
wobei wenigstens eines der Fertigungsverfahren ein Warmumformen des Werkstückes (10) ist, zu dessen Zweck das Werkstück (10) einem ersten, zumindest partiellen Erwärmen unterzogen wird, und nach dem Warmumformen wenigstens ein weiteres Fertigungsverfahren am Werkstück (10) durchgeführt wird,
wobei
nach dem Warmumformen das Werkstück (10) zur Verbesserung seines Formänderungsvermögens und/oder Verringerung der Festigkeit zur Vorbereitung des weiteren Fertigungsverfahrens mittels wenigstens einer im Fertigungsverfahrensablauf zwischen Bearbeitungsstationen angeordneten Erwärmungseinrichtung (41, 42, 43) zumindest partiell erneut erwärmt wird, wobei das erneute Erwärmen des Werkstücks (10) mittels Stromfluss in Form von Wirbelströmen durch das Werkstück (10) induktiv erfolgt,
**dadurch gekennzeichnet, dass**
das Warmumformen ein erstes Warmumformen ist und das weitere, nach dem ersten Warmumformen durchgeführte Fertigungsverfahren ein zweites Warmumformen ist, oder dass das nach dem Warmumformen durchgeführte Fertigungsverfahren ein Trennverfahren, insbesondere ein mechanisches Beschneiden, ist.

2. Verfahren zur Herstellung eines Bauteils nach Anspruch 1,
**dadurch gekennzeichnet, dass**
das erneute Erwärmen des Werkstücks (10) während des Transportes erfolgt.

3. Verfahren zur Herstellung eines Bauteils nach Anspruch 1,
**dadurch gekennzeichnet, dass**
das erneute Erwärmen des Werkstücks (10) während dessen Ablage zwischen zwei Bearbeitungsstationen erfolgt.

4. Verfahren zur Herstellung eines Bauteils nach einem der Ansprüche 1-3,
**dadurch gekennzeichnet, dass**
nach der Durchführung des Trennverfahrens ein zweites Warmumformen des Werkstückes (10) erfolgt.

5. Verfahren zur Herstellung eines Bauteils nach Anspruch 4,
**dadurch gekennzeichnet, dass**
nach dem ersten Warmumformen und vor dem Trennen eine Temperierung, insbesondere eine Abkühlung, des Werkstückes (10) erfolgt.

6. Verfahren zur Herstellung eines Bauteils nach wenigstens einem der vorhergehenden Ansprüche,
**dadurch gekennzeichnet, dass**
zumindest eine erneute Erwärmung des Werkstückes (10) lediglich partiell erfolgt.

7. Fertigungsstraße zur Herstellung eines Bauteils, insbesondere eines Karosserieteiles, welche insbesondere zur Durchführung des Verfahrens nach wenigstens einem der Ansprüche 1 bis 6 geeignet ist, und mehrere seriell angeordnete Bearbeitungsstationen zur Durchführung jeweils eines Fertigungsverfahrens zur Realisierung unterschiedlicher Fertigungsstufen an einem Werkstück (10) bei der Herstellung des Bauteils aufweist, wobei die Fertigungsstraße wenigstens eine erste Erwärmungseinrichtung (40) und als wenigstens eine danach angeordnete Bearbeitungsstation eine Warmumformungseinrichtung (30) umfasst,
wobei
die Fertigungsstraße nach dieser Warmumformungseinrichtung (30) und vor einer weiteren Bearbeitungsstation eine weitere Erwärmungseinrichtung (41) aufweist, wobei die weitere Erwärmungseinrichtung (41) dafür geeignet ist, das erneute Erwärmen des Werkstücks (10) mittels Stromfluss in Form von Wirbelströmen durch das Werkstück (10) induktiv zu realisieren,
**dadurch gekennzeichnet, dass** die Fertigungsstraße nach der Warmumformungseinrichtung (30) eine weitere Bearbeitungsstation zur Durchführung eines weiteren Fertigungsverfahrens aufweist, wobei das weitere Fertigungsverfahren ein Warmumformverfahren oder ein Trennverfahren, insbesondere ein mechanisches Beschneiden, ist.

8. Fertigungsstraße nach Anspruch 7,
**dadurch gekennzeichnet, dass**
wenigstens eine verwendete Erwärmungseinrichtung (40, 41, 42, 43) derart ausgestaltet ist, dass sie an mehreren Stellen zwischen jeweils unterschiedlichen Bearbeitungsstationen einsetzbar ist.

9. Fertigungsstraße nach wenigstens einem der Ansprüche 7 oder 8,
**dadurch gekennzeichnet, dass**
wenigstens eine verwendete Erwärmungseinrichtung (40, 41, 42, 43) eine Durchlaufanlage mit Querfeldinduktor und/oder Längsfeldinduktor (81) ist.

## Claims

1. Method for producing a component, in particular a vehicle body part, in which a workpiece (10) for producing the component passes through multiple manufacturing stages, and, in each manufacturing stage, a manufacturing process is carried out, and the workpiece (10), for the purpose of realizing each manufacturing stage, is in each case fed to a respective processing station for carrying out the respective manufacturing process,
wherein at least one of the manufacturing processes is a hot forming process for the workpiece (10), for the purpose of which the workpiece (10) is subjected to a first, at least partial heating, and, after the hot forming process, at least one further manufacturing process is carried out at the workpiece (10), wherein,
after the hot forming process, the workpiece (10), for the purpose of improving its deformability and/or reducing strength, for preparation of the further manufacturing process, is at least partially reheated by means of at least one heating device (41, 42, 43) arranged between processing stations in the manufacturing process sequence, wherein the reheating of the workpiece (10) is realized inductively by means of current flow, in the form of eddy currents through the workpiece (10),
**characterized in that**
the hot forming process is a first hot forming process, and the further manufacturing process carried out after the first hot forming process is a second hot forming process, or **in that** the manufacturing process carried out after the hot forming process is a separation process, in particular a mechanical cutting process.

2. Method for producing a component according to Claim 1,
**characterized in that**
the reheating of the workpiece (10) is realized during the transport.

3. Method for producing a component according to Claim 1,
**characterized in that**
the reheating of the workpiece (10) is realized while it is set down between two processing stations.

4. Method for producing a component according to one of Claims 1-3,
**characterized in that**,
after the separation process has been carried out, a second hot forming process for the workpiece (10) is realized.

5. Method for producing a component according to Claim 4,
**characterized in that**,
after the first hot forming process and before the separation process, temperature control, in particular cooling, of the workpiece (10) is realized.

6. Method for producing a component according to at least one of the preceding claims,
**characterized in that**
at least one reheating process for the workpiece (10) is realized only partially.

7. Production line for producing a component, in particular a vehicle body part, which is suitable in particular for carrying out the method according to at least one of Claims 1 to 6 and has multiple processing stations, which are arranged in series and serve for carrying out in each case one manufacturing process, for realizing different manufacturing stages at a workpiece (10) during the production of the component, wherein the production line comprises at least one first heating device (40) and, as at least one processing station arranged after the latter, a hot forming device (30),
wherein
the production line has a further heating device (41) after said hot forming device (30) and before a further processing station, wherein the further heating device (41) is suitable for realizing the reheating of the workpiece (10) inductively by means of current flow, in the form of eddy currents through the workpiece (10),
**characterized in that** the production line, after the hot forming device (30), has a further processing station for carrying out a further manufacturing process, wherein the further manufacturing process is a hot forming process or a separation process, in particular a mechanical cutting process.

8. Production line according to Claim 7,
**characterized in that**
at least one heating device (40, 41, 42, 43) used is designed so as to be usable at multiple locations between in each case different processing stations.

9. Production line according to at least one of Claims 7 and 8,
**characterized in that**
at least one heating device (40, 41, 42, 43) used is a continuous installation with a transverse-field inductor and/or a longitudinal-field inductor (81).

## Revendications

1. Procédé de fabrication d'un composant, en particulier d'une partie de carrosserie, procédé dans lequel, pour la fabrication du composant, une pièce (10) passe par plusieurs étapes de fabrication et un processus de fabrication est mis en œuvre à chaque étape de fabrication et, pour réaliser chaque étape de fabrication, la pièce (10) est amenée à un poste de traitement respectif pour mettre en œuvre le processus de fabrication respectif,
l'un au moins des processus de fabrication étant un formage à chaud de la pièce (10) dont le but est de soumettre la pièce (10) à un premier chauffage au moins partiel et, après le formage à chaud, de mettre en œuvre au moins un autre processus de fabrication sur la pièce (10),
après le formage à chaud, la pièce (10) étant au moins partiellement chauffée afin d'améliorer sa déformabilité et/ou de réduire sa résistance en vue de préparer le processus de fabrication ultérieur au moyen d'au moins un dispositif de chauffage (41, 42, 43) disposé entre les postes de traitement au cours des processus de fabrication, le chauffage de la pièce (10) étant effectué par induction au moyen d'un flux de courant se présentant sous la forme de courants de Foucault à travers la pièce (10),
**caractérisé en ce que**
le formage à chaud est un premier formage à chaud et le processus de fabrication ultérieur effectué après le premier formage à chaud est un deuxième formage à chaud, ou **en ce que** le processus de fabrication effectué après le formage à chaud est un processus de séparation, en particulier une découpe mécanique.

2. Procédé de fabrication d'un composant selon la revendication 1,
**caractérisé en ce que**
le nouveau chauffage de la pièce (10) est effectué pendant le transport.

3. Procédé de fabrication d'un composant selon la revendication 1,
**caractérisé en ce que**
le nouveau chauffage de la pièce (10) est effectué lorsque celle-ci est reçue entre deux portes de traitement.

4. Procédé de fabrication d'un composant selon l'une des revendications 1 à 3,
**caractérisé en ce que**
un deuxième formage à chaud de la pièce (10) est effectué après la réalisation du processus de séparation.

5. Procédé de fabrication d'un composant selon la revendication 4,
**caractérisé en ce que**
une trempe, notamment un refroidissement, de la pièce (10) est effectué après le premier formage à chaud et avant la séparation.

6. Procédé de fabrication d'un composant selon l'une au moins des revendications précédentes,
**caractérisé en ce que**
au moins un nouveau chauffage de la pièce (10) n'est chauffé que partiellement.

7. Ligne de fabrication destinée à la fabrication d'un composant, en particulier d'une partie de carrosserie, laquelle ligne de fabrication est particulièrement adaptée à la mise en œuvre du procédé selon l'une au moins des revendications 1 à 6, et présente une pluralité de postes de traitement disposés en série et destinés à mettre en œuvre un processus de fabrication respectif pour réaliser différentes étapes de fabrication sur une pièce (10) lors de la fabrication du composant, la ligne de fabrication comprenant au moins un premier dispositif de chauffage (40) et, en tant qu'au moins un poste de traitement disposé à la suite, un dispositif de formage à chaud (30),
la ligne de fabrication comportant après ce dispositif de formage à chaud (30) et devant un autre poste de traitement un dispositif de chauffage supplémentaire (41), le dispositif de chauffage supplémentaire (41) étant adapté pour effectuer un nouveau chauffage de la pièce (10) par induction au moyen d'un flux de courant se présentant sous la forme de courants de Foucault à travers la pièce (10),
**caractérisé en ce que** la ligne de fabrication comporte après le dispositif de formage à chaud (30) un autre poste de traitement destiné à effectuer un processus de fabrication supplémentaire, le processus de fabrication supplémentaire étant un processus de formage à chaud ou un processus de séparation, en particulier une découpe mécanique.

8. Ligne de fabrication selon la revendication 7,
**caractérisée en ce que**
au moins un dispositif de chauffage (40, 41, 42, 43) utilisé est conçu de façon à pouvoir être utilisé en plusieurs points entre différents postes de traitement.

9. Ligne de fabrication selon l'une au moins des revendications 7 ou 8,
**caractérisée en ce que**
au moins un dispositif de chauffage (40, 41, 42, 43) utilisé est un système continu comprenant une inductance à champ transversal et/ou une inductance à champ longitudinal (81).
